# EUROPÄISCHE PATENTANMELDUNG

(11) **EP 0 895 923 A1**
(43) Veröffentlichungstag der Anmeldung: **10.02.1999**
(21) Anmeldenummer: 98202606.4
(22) Anmeldetag: 03.08.1998
(51) Int. Cl.: B62D 7/14, B62D 13/04, B62D 15/02

(54) **Hinterradlenkvorrichtung**

(30) Priorität: 08.08.1997 NL 1006749
(71) Anmelder: APPLIED POWER INC., Butler Wisconsin 53007 (US); DAF TRUCKS N.V., 5643 TW Eindhoven (NL)
(72) Erfinder: Grolle, Paul Robert, 7577 HV Oldenzaal (NL); Damhuis, Erwin Bernardus Johannes, 7555 KK Hengelo (NL); Schop, Ronald, 5672 VG Nuenen (NL); Lamers, Alexander Stephanus, 5931 HP Tegelen (NL)
(74) Vertreter: Brookhuis, Hendrik Jan Arnold

(57) **Zusammenfassung**

Lenkvorrichtung für mitlenkende Hinterräder (8) eines Fahrzeugs mit lenkbaren Vorderrädern (2), umfassend einen auf die Hinterräder (8) angreifenden doppeltwirkenden hydraulischen Aktuator (12) mit einem Körper und einem in diesem beweglichen Kolben, der eine erste variable Arbeitskammer und eine zweite variable Arbeitskammer begrenzt, welche erste und zweite Arbeitskammern jeweils einen ersten und einen zweiten Anschluß, einen Behälter (13) für hydraulische Flüssigkeit, und eine Pumpe (14) mit einem Sauganschluß zum Ansaugen von Flüssigkeit aus dem Behälter (13) und einen Pumpenanschluß zum unter Druck Zuführen von hydraulischer Flüssigkeit zum Aktuator (12) aufweisen, wobei weiter ein steuerbares erstes Steuerventil (15) mit drei Stellungen vorgesehen ist, welches erstes Ventil (15) in seiner ersten gesteuerten Stellung den Pumpenanschluß der Pumpe (14) mit dem ersten Anschluß und den zweiten Anschluß mit dem Behälter (13) verbindet und in seiner zweiten gesteuerten Stellung den Pumpenanschluß mit dem zweiten Anschluß und den ersten Anschluß mit dem Behälter (13) verbindet.

Das erste Ventil (15) ist in solcher Weise ausgeführt, daß das Ventil in seiner dritten Stellung den ersten und den zweiten Anschluß miteinander und mit dem Behälter (13) verbindet. Weiter bildet das erste Ventil (15) in seiner dritten Stellung eine Drosselung in der Verbindung zwischen dem ersten und dem zweiten Anschluß des Aktuators (12).

## Beschreibung

Die Erfinding bezieht sich auf eine Lenkvorrichtung zum Lenken von mit den Vorrädern mitlenkenden Rädern eines Fahrzeugs. Es ist bekannt, eine hydraulische Lenkvorrichtung für die mitlenkenden Hinterräder eines Lastkraftwagens vorzusehen. Beispiele derartiger Lenkvorrichtungen sind in der EP 0 563 693 und der EP 0 555 857 beschrieben worden.

Die vorliegende Erfindung findet insbesondere Anwendung für eine Lenkvorrichtung für ein obenbeschriebenes Fahrzeug, bei der die mitlenkenden Hinterräder jeweils um eine zugehörige Achsschenkelachse schwenkbar sind und durch eine Spurstange untereinander verbunden sind. Im Rahmen der vorliegenden Anmeldung wird unter mitlenkenden Hinterrädern auch die mitlenkenden Räder einer hinter der vorderen Vorderachse liegenden zweiten Vorderachse des Fahrzeugs verstanden, wie bei vierachsigen Lastkraftwagen bekannt ist. Weiter ist die vorliegende Erfindung auch anwendbar auf die Lenkung von Rädern eines gezogenen Anhängers.

Der vorliegenden Erfindung liegt nach deren erstem Aspekt die Aufgabe zugrunde, eine Lenkvorrichtung zu schaffen, die, was der Aufbau des hydraulischen Teils betrifft, wesentlich einfacher als den bekannten Lenkvorrichtungen ist, wodurch die Zuverlässigkeit zunimmt und insbesondere der Kostpreis niedriger als der der bekannten Lenkeinrichtungen sein kann. Weiter liegt der vorliegenden Erfindung die Aufgabe zugrunde, eine Lenkvorrichtung zu schaffen, die ständig in Betrieb ist, wenn mit dem Fahrzeug gefahren wird und also nicht ausschließlich in besonderen Situationen wirksam ist, wie lediglich beim Zurückfahren mit dem Fahrzeug.

Die EP 0 577 571 beschreibt eine Lenkvorrichtung, die ausschließlich beim Zurückfahren mit dem Fahrzeug wirksam ist. Dabei wird ein Dreistellungen-Wegeventil angewendet, das in der Mittelstellung die beiden Arbeitskammern des Zylinders miteinander und mit dem Behälter verbindet. Diese Lenkvorrichtung ist in solcher Weise ausgeführt, daß die elektrisch angetriebene Hydraulikpumpe außer Betrieb ist, wenn mit dem Fahrzeug forwärts gefahren wird. Das Steuerventil befindet sich dann in seiner Mittelstellung und die durch die Lenkvorrichtung lenkbaren Räder suchen dann selbst ihre richtige Lage.

Die vorliegende Erfindung schafft nach ihrem ersten Aspekt eine Lenkvorrichtung nach Anspruch 1.

Die Lenkvorrichtung ist sowohl zum Lenken von Rädern geeignet, die auf einer Nachlaufachse, als auch auf einer Vorlaufachse angeordnet sind. Weiter kann die gelenkte Achse auch eine hebbare Achse sein.

Die lenkende Wirkung kann geschwindigkeitsabhängig sein und kann auch abhängig von der Wirkung des Bremssystems des Fahrzeuge gemacht werden, insbesondere wenn es ein Antiblockiersystem ist.

Wenn die gelenkte Achse Teil eines gezogenen Anhängers ist, kann ein Winkelsensor bei der Kupplungsschüssel dazu dienen, ein Steuersignal für die Wirkung der Lenkvorrichtung zu erhalten.

Vorzugsweise ist die Hydraulikpumpe eine druckausgeglichene Pumpe, so daß jegliche von den lenkbaren Rädern erzeugte Gegenkraft überwunden werden kann.

Die Erfindung ist insbesondere anwendbar, wenn die mitlenkenden Räder des Fahrzeugs schwenkbar um eine Achsschenkelachse sind und diese Räder beim Geradeausfahren mit dem Fahrzeug von selbst die Neigung haben, ihre Geradeausfahrstand einzunehmen. In der dritten Stellung des ersten Ventile genügt es deshalb, die Anschlüsse des Aktuators untereinander zu verbinden, so daß der Aktuator gestattet, daß die Hinterräder selbst ihre Lage suchen.

In einer günstigen Ausführung ist der doppeltwirkende Aktuator ein linearer Zylinder mit einer an einer einzigen Seite herausragenden Kolbenstange, weil ein derartiger Zylinder kostenkünstig und zuverlässig ist und leicht an dem Fahrzeug angeordnet werden kann. Auch könnte ein Aktuator des Typs, der an beiden Seiten des Kolbens eine gleiche effektive Oberfläche aufweist, angewendet werden, was in der Praxis mit einem mit einer durchgehenden bzw. zweiseitigen Kolbenstange versehenen Zylinder, der an beiden Seiten aus dem Zylinder herausragt, realisierbar ist.

Die Drosselung, die vorzugsweise durch das Steuerventil in der dritten Stellung erhalten wird, bewirkt die notwendige Dämpfung der Radbewegung.

Bei der Erfindung ist weiterhin vorgesehen, daß das erste Ventil in die dritte Stellung gebracht wird, wenn mit dem Fahrzeug geradeaus gefahren wird, aber auch wenn irgendwelche Störing in dem System, das die mitlenkenden Räder ansteuert, auftritt. Bei einer derartigen Störung kann gedacht werden an eine Störung eines der normalerweise vorhandenen Winkelaufnehmer, die die Winkellage der Vorderräder und der mitlenkenden Hinterräder detektieren oder des elektronischen Regels der Lenkvorrichtung. Bei der Erfindung ist vorgesehen, daß es in einer derartigen Störungssituation ausreicht, das Dreistellungen-Wegeventil in seine dritte Stellung zu bringen. Insbesondere sind erfindungsgemäß bei um eine Achsschenkelachse schwenkbaren mitlenkenden Hinterrädern keine zusätzlichen Sicherungsmittel notwendig, die die Hinterräder in den Geradeausstand bringen und dann festlegen, wie in der EP 0 563 693 und der EP 0 555 857 beschrieben.

In einer bevorzugten Ausbildung der erfindungsgemäßen Lenkvorrichtung ist nicht das Dreistellungen-Wegeventil als Proportionalventil ausgeführt, sondern ist ein Zweistellungen-Wegeventil vorgesehen, das proportional ausgeführt ist.

In einer weiteren vorteilhaften Ausführung ist vorgesehen, einen hydraulischen Akkumulator in dem Hydraulikkreis anzuordnen, Wo hydraulische Flüssigkeit unter Druck gespeichert wird. Hierdurch ist es möglich, eine Pumpe mit einer geringen Leistung zu verwenden, weil in den Momenten, wo keine Lenkbewegung ausgeführt wird, hydraulische Flüssigkeit in dem Akkumulator gespeichert wird, die dann bei einer Lenkbewegung dem Ertrag der Pumpe zugefügt wird. Weiter ermöglicht ein Akkumulator Lenkung der Räder, auch wenn die Pumpe eine Störung aufweist.

Ein zweiter Aspekt der vorliegenden Erfindung bezieht sich auf eine Winkelaufnehmereinheit zum Detektieren des Radstandes eines Fahrzeugs. Ein derartiger Aufnehmer ist selbstverständlich anwendbar in Verbindung mit der hier beschriebenen erfindungsgemäßen Lenkvorrichtung, aber auch in Verbindung mit ähnlichen Lenkvorrichtungen, oder zum Detektieren des Radstandes für andere Zwecke.

Die vorliegende Anmeldung bezieht sich auch auf ein Fahrzeug und/oder eine erfindungsgemäße Winkelaufnehmereinheit.

Die vorliegende Erfindung wird hiernach anhand der Zeichnung erläutert werden. Es zeigt:
- Fig. 1: schematisch ein mit einer erfindungsgemäßen Lenkvorrichtung versehenes Fahrzeug,
- Fig. 2: das hydraulische Schaltbild eines ersten Ausführungsbeispiels der erfindungsgemäßen Lenkvorrichtung,
- Fig. 3: das hydraulische Schaltbild eines zweiten Ausführungsbeispiels der erfindungsgemäßen Lenkvorrichtung,
- Fig. 4: in senkrechtem Querschnitt das obere Ende eines Achsschenkels und eine auf diesen befestigte Winkelaufnehmereinheit nach dem zweiten Aspekt der Erfindung,
- Fig. 5: in einer Unteransicht das Kupplungsorgan der Winkelaufnehmereinheit nach dem zweiten Aspekt der Erfindung, und
- Fig. 6: den Querschnitt entlang der Linie VI - VI in Figur 5.

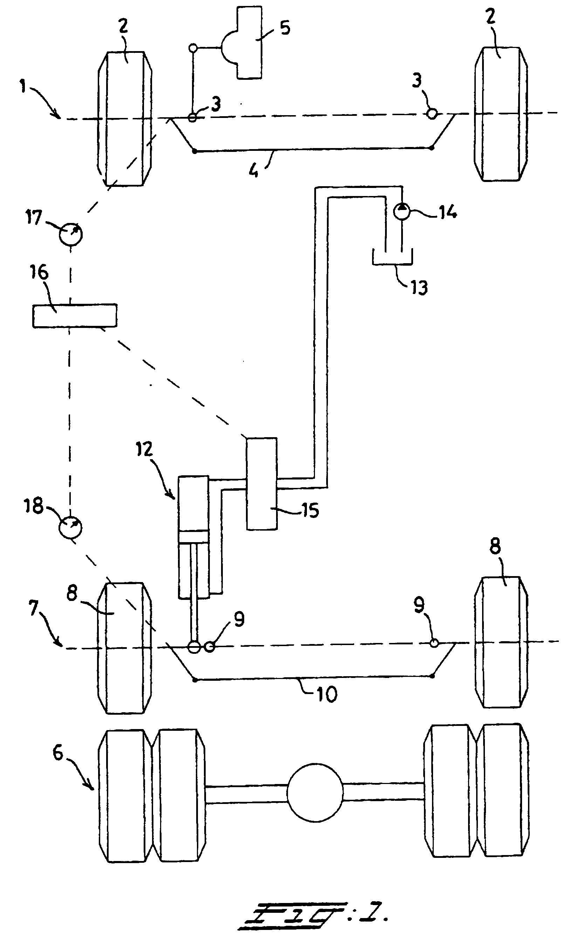

Figur 1 zeigt schematisch ein Fahrzeug mit einer an sich bekannten Vorderachsenkonstruktion 1, mit zwei Vorderrädern 2, die jeweils um eine schematisch angedeutete Achsschenkelachse 3 schwenkbar sind und über eine Spurstange 4 miteinander verbunden sind. Zum Lenken der Vorderräder 2 ist ein übliches Lenkmechanismus 5 vorgesehen.

Das Fahrzeug umfaßt weiter eine von dem nicht gezeigten Verbrennungsmotor des Fahrzeugs angetriebene hintere Hinterachse 6 einer an sich bekannten Ausführung, die hier nicht näher erläutert werden wird. Vor der angetriebenen Hinterachse 6 liegt eine vordere Hinterachse 7 mit zwei Hinterrädern 8, die jeweils um eine zugehörige Achsschenkelachse 9 schwenkbar sind und über eine Spurstange 10 miteinander verbunden sind. Die Hinterräder 8 sind mitlenkend, das heißt, beim Schwenken der Vorderräder 2 werden die Hinterräder 8 in einen zugehörigen geeigneten Stand gebracht.

Zum Lenken der Hinterräder 8 ist eine hydraulisch wirkende Lenkvorrichtung vorgesehen. Diese Lenkvorrichtung umfaßt einen auf die Hinterräder 8 angreifenden doppeltwirkenden hydraulischen Aktuator 12, einen Behälter 13 für hydraulische Flüssigkeit, und eine von dem Verbrennungsmotor des Fahrzeugs angetriebene Pumpe 14 zum Ansaugen von Flüssigkeit aus dem Behälter 13 und für die Zufuhr von hydraulischer Flüssigkeit unter Druck zum Aktuator 12.

Weiter umfaßt die Lenkvorrichtung eine noch näher zu beschreibende Ventilanordnung 15. Zum Regeln der Wirkung der Lenkvorrichtung ist ein schematisch angedeuteter elektronischer Regler 16 vorgesehen, der mit der Ventileinheit 15 und mit einem ersten Winkelaufnehmer 17, der den Stand der Vorderräder 2 detektiert, sowie einem zweiten Winkelaufnehmer 18, der den Stand der mitlenkenden Hinterräder 8 detektiert, in Verbindung steht.

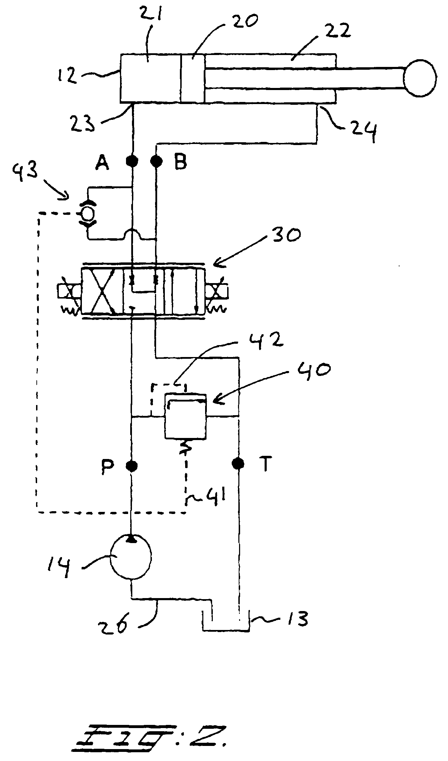

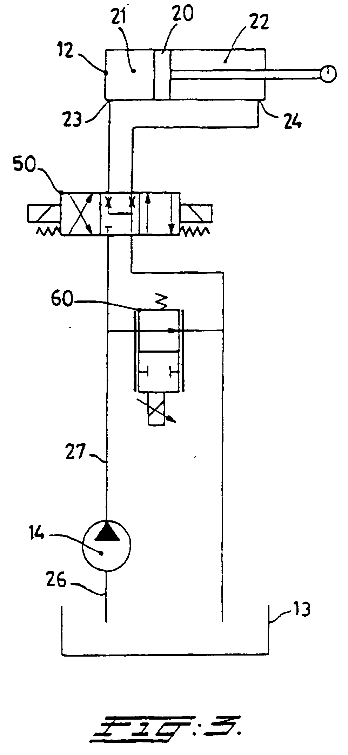

Die Ventilanordnung 15 dient, um die Wirkung des Aktuators 12 zu regeln, und hiernach werden anhand der Figuren 2 und 3, die jeweils deren erstes und deren zweites Ausführungsbeispiel zeigen, beschrieben werden. In Figur 2 ist der doppeltwirkender Aktuator 12 mit einem

Körper und einem in diesem beweglichen Kolben 20 ersichtlich, der eine erste variable Arbeitskammer 21 und eine zweite variable Arbeitskammer 22 begrenzt, welche erste und zweite Arbeitskammer 21, 22 jeweils einen ersten Anschluß 23 und einen zweiten Anschluß 24 haben. Die Pumpe 14 hat eine einzige Pumprichtung und hat einen Sauganschluß 26 und einen Pumpenanschluß 27. Die Pumpe 14 wird direkt von dem Motor des Fahrzeugs angetrieben, so daß die Pumpe 14 immer in Betrieb ist und hydraulische Flüssigkeit pumpt, wenn der Motor läuft.

Die Ventilanordnung 15 weist hier einem Dreistellungen proportionalschieberventil 30 mit vier hydraulischen Anschlüssen und zwei elektrischen Steuerspulen auf. Die Mittelstellung ist hier weiter als die dritte Stellung angedeutet. In einer ersten gesteuerten Stellung verbindet das Ventil 30 den Pumpenanschluß 27 der Pumpe 14 mit dem ersten Anschluß 23 und den zweiten Anschluß 24 mit dem Behälter 13. In der zweiten gesteuerten Stellung verbindet das Ventil 30 den Pumpenanschluß 27 mit dem zweiten Anschluß 24 und den ersten Anschluß des Aktuators 23 mit dem Behälter 13. In der dritten Stellung verbindet das Ventil 30 die ersten und die zweiten Anschlüsse 23, 24 des Actuators 12 miteinander und mit dem Behälter 13 und ist die Verbindung über das Ventil 30 zwischen dem Pumpenanschluß 27 der Pumpe 14 und dem Aktuator 12 abgeschlossen. Es wird deutlich sein, daß das Proportionalventil 30 auch viele mögliche Zwischenpositionen der jetzt genannten Positionen einnehmen kann.

Wichtig ist, daß das Teil des Ventils, das in der dritten Stellung des Ventils 30 die Verbindung zwischen beiden Anschlüssen 23 en 24 des Aktuators 12 bildet, eine Dämpfung für die Strömung von hydraulischer Flüssigkeit von der einen Arbeitskammer in die andere Arbeitskammer des Aktuators 12 bildet. Dies kann bei einem derartigen Schieberventil auf einfache Weise realisiert werden durch eine geeignete Ausführung des Schieberkörpers und der zugehörigen Steuerkanten des Körpers, in den der Schieberkörper hineinschiebt.

Die Ventilanordnung enthält weiter ein zweites Ventil 40, das an einer Seite an die Verbindung zwischen dem Pumpenanschluß 27 und dem Dreistellungen-proportionalventil 30 anschließt und an der anderen Seite mit dem Behälter 13 in Verbindung steht. Dieses Ventil 40, das hier als hydraulisch gesteuertes Druckregelventil angedeutet wird, wird in der Praxis auch wohl mit den Termen Druckausgleichventil, Hydrostat, oder Ausgleichventil angedeutet. Das Ventil 40 hat die Aufgabe, wenn sich das Ventil 30 in der dritten Stellung befindet, den vollständigen Ertrag der Pumpe 14, die ständig läuft, zum Behälter 13 zurückzuführen. Wenn sich das Ventil 30 nicht in der dritten Stellung befindet, und also über das Ventil 30 Flüssigkeit zum Aktuator strömt, um eine Lenkbewegung auszuführen, hat das Ventil 40 die Aufgabe, über das Ventil 30 einen im wesentlichen konstanten Druckabfall zwischen der Pumpe (bei P) und der betreffenden Leitung (bei A oder B) zu bewirken. Dies wird gemacht, um so bei dem betreffenden Anschluß des Aktuators 12, dem in diesem Moment hydraulische Flüssigkeit zugeführt wird, einen im wesentlichen konstanten Volumenstrom zu realisieren. Das Ventil 40 regelt dazu stufenlos die Flüssigkeitsmenge, die über das Ventil 40 zum Behälter 13 strömen kann. Insbesondere ist das Ventil 40 ein von einem hydraulischen Steuerdruck gesteurtes Druckregelventil, das einen Steuerdruckanschluß hat, der über eine Steuerleitung 41 und ein Wechselventil 43 mit dem ersten Anschluß 23 oder mit dem zweiten Anschluß 24 des Aktuators 12 in Verbindung steht, abhängig von der Tatsache, bei welchem Anschluß 23 oder 24 der Druck am höchsten ist. An der anderen Seite des Ventils 40 wirkt ein hydraulischer Steuerdruck, der dem Pumpendruck entspricht, was schematisch mit der Steuerdruckleitung 42 dargestellt ist.

Wenn mit dem Fahrzeug geradeaus gefahren wird, befindet sich das Ventil 30 in seiner dritten Stellung und ist das Ventil 40 geöffnet, weil in der Steuerleitung 42 ein hydraulischer Druck herrscht, der das Ventil 40 gegen die Federrückstellung in offen drückt. Hierdurch strömt die hydraulische Flüssigkeit der Pumpe 14 über das Ventil 40 zum Behälter 13. Wenn der Fahrer eine Kurve nimmt, schwenken die Vorderräder 2, was von dem Winkelaufnehmer 17 detektiert wird. Hierauf wird der Regler 16 über einen geeigneten Algorithmus, der von dem allgemein bekannten Ackermann-Prinzip zum Bestimmen der Winkellage von mitlenkenden Hinterrädern hergeleitet sein kann, dem Ventil 30 ein Steuersignal zuführen, das dadurch aus seiner dritten Stellung in die erste oder die zweite Stellung übergeht. Hierdurch wird hydraulische Flüssigkeit einer der beiden Arbeitskammern 21, 22 des Aktuators 12 zugeführt und wird die andere gerade leerströmen, wodurch sich der Kolben 20 bewegt und damit die Hinterräder 8. Bei einem bereits geringen Druck in den Leitungen zwischen dem Ventil 30 und dem Aktuator 12 kommt auch Druck auf die Steuerleitung 41 und wird sich das Ventil 40 völlig oder zum Teil schließen, um so den Druckabfall über das Ventil 30 auf einem bestimmten Wert zu halten und damit zu erreichen, daß der Volumenstrom zum Aktuator 12 während der Lenkbewegung auf einem bestimmten Wert gehalten wird. Weil das Ventil 30 proportional ist, kann die Zufuhr von hydraulischer Flüssigkeit zum Aktuator 12 und dadurch die Bewegung des Aktuators 12 genau geregelt werden.

Auch wenn die Vorderräder 2 einen geringen Lenkungsausschlag machen, zum beispiel weniger als 7°, oder einen anderen auf geeignete Weise zu wählenden Wert, wird sich das Ventil 30 in seiner dritten Stellung befinden. Dies ist hauptsächlich gemacht worden, um vorzubeugen, daß geringe korrigierende Lenkbewegungen des Fahres des Fahrzeugs immer zu dem verstärkten Mitlenken der Hinterräder 8 führen. Wegen der Tatsache, daß sich die Hinterräder 8 jeweils um eine Achsschenkelachse 9 schwenken, welche Konstruktion allgemein bekannt ist, werden die Hinterräder 8 von selbst ihren richtigen Stand suchen, wenn sich das Ventil 30 in seiner dritten Stellung befindet. Diese Eigenschaft ist im Rahmen der Sicherheit des Fahrzeugs sehr vorteilhaft, wenn die Lenkvorrichtung eine Störing aufweisen würde. Die Störung kann zum Beispiel eine Fehlwirkung eines der Winkelaufnehmer 17, 18 sein, wodurch der Regler 16 einen unakzeptablen Unterschied zwischen dem Stand der Vorderräder 2 und der Hinterräder 8 feststellt. In diesem Fall bringt der Regler 16 das Ventil 30 in seine dritte Stellung, wodurch die Hinterräder 8 selbst ihren Stand suchen, ohne dabei von dem Aktuator 12 blockiert zu werden. Es ist schon wichtig, daß der dabei auftretende Flüssigkeitsstrom in dem Ventil 30 gedrosselt wird, so daß die Bewegung der Hinterräder 8 gedämpft ist. Der dämpfende Effekt könnte auch dadurch erhalten werden, daß die Dämpfung in die Leitungen zwischen dem Ventil 30 und dem Aktuator 12 und nicht in das Ventil 30 selbst aufgenommen wird. Dann würden die Drosselungen aber auch wirken, wenn die Pumpe 14 dem Aktuator 12 in der ersten oder zweiten Stellung des Ventils 30 Flüssigkeit zuführt, was von Nachteil für den Energieverbrauch der Lenkvorrichtung ist, und die Reaktion des Aktuators 12 auf die von dem Regler 16 an das Ventil 30 ausgesandten Signale verzögert. Die Drosselwirkung kann abhängig von dem angewendeten Aktuator unterschiedlich sein, und auch kann die Drosselung in der einen Strömungsrichtung anders als in der anderen sein.

Figur 3 zeigt wiederum den Aktuator 12, die Pumpe 14 und den Speciher 13. Statt des Dreistellungenproportionalventils 30 ist jetzt ein Dreistellungen-Wegeventil 50 mit drei diskreten Stellungen und mit elektrischen Steuerspulen vorgesehen, die mit dem Regler 16 verbunden sind und mit einer Federrückstellung in der Mittelstellung, die hier als die dritte Stellung angedeutet ist. In seiner ersten gesteuerten Stellung verbindet das Ventil 50 den Pumpenanschluß 27 der Pumpe 14 mit dem ersten Anschluß 23 und den zweiten Anschluß 24 mit dem Behälter 13 und in seiner Zweiten gesteuerten Stellung verbindet das Ventil 50 den Pumpenanschluß 27 mit dem zweiten Anschluß 24 und den ersten Anschluß 23 mit dem Behälter 13. In seiner dritten Stellung verbindet das Ventil 50 die ersten und die zweiten Anschlüsse 23, 24 des Aktuators 12 miteinander und schließt die Verbindung über das Ventil 30 der Pumpe 14 zum Aktuator 12 ab. Wie anhand der Figur 2 beschrieben ist, bildet das Ventil 50 in seiner dritten Stellung eine Drosselung in der Verbindung zwischen den ersten und den zweiten Anschlüssen 23, 24 des Aktuators 12.

Weiter ist ein elektrisch gesteuertes Zweistellungenproportionalventil 60 vorgesehen, das zwischen dem Pumpenanschluß 27 und dem Dreiwegesteuerventil 50 angeordnet ist und in seiner ersten Stellung den Pumpenanschluß 27 mit dem Behälter 13 verbindet und in seiner zweiten Stellung dieses Ventile geschlossen ist. Das Ventil 60 steht mit dem Regler 16 in Verbindung und dient zum Regeln der dem Aktuator 12 über das Ventil 50 zugeführten Flüssigkeit, was dadurch erfolgt, daß der Rückstrom der Pumpe 14 zum Behälter 13 geregelt wird.

In einer Störungssituation bringt der Regler 16 das Ventil 50 in seine dritte Stellung, wodurch die gleiche Wirkung wie anhand der Figur 2 beschrieben, erhalten wird. Auch beim Geradeausfahren befindet sich das Ventil 50 in seiner dritten Stellung.

Die gezeigten hydraulischen Schaltbilder sind sehr einfach und erhalten wenig Komponenten.

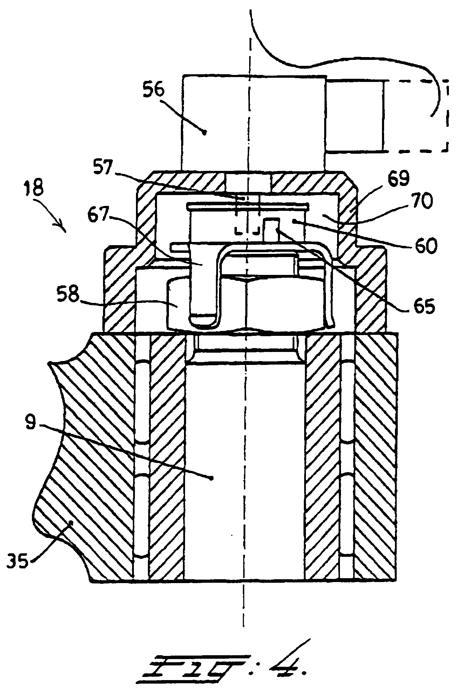

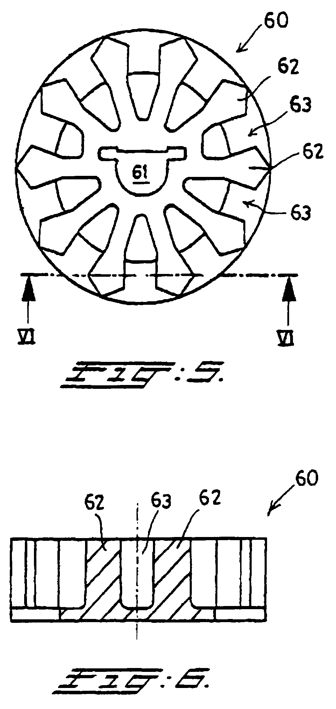

Die Figuren 4 - 6 zeigen die Winkelaufnehmereinheit 18 und deren Kupplungsorgan.

Die in Figur 4 gezeigte Winkelaufnehmereinheit 18 ist zum Detektieren des Standes von einem der Räder 8 vorgesehen, welches Rad 8 an einem Achsschenkel 55 befestigt ist, der um eine stationäre Achsschenkelachse 9 des Fahrzeugs schwenkbar ist. Die Winkelaufnehmereinheit 18 umfaßt einen elektrischen Sensor 56, insbesondere einen Halleffektsensor, der ein Gehäuse mit einer drahbaren Achse 57 umfaßt zum Verschaffen eines elektrischen Signals, das repräsentativ ist für die Winkellage des Rades 8.

Das Gehäuse des Sensors 56 ist fest mit dem Achsschenkel 55 verbunden, so daß das Gehäuse den Bewegungen des Rads 8 folgt. Die drehbare Achse 57 des Sensors 56 liegt nahezu in der Verlängerung der Achsschenkelachsenmitte 9. An dem oberen Ende der Achsschenkelachse 9 sitzt eine Mutter 58, was allgemein bekannt ist. Die Winkelaufnehmereinheit 18 umfaßt Kupplungsmittel zum Kuppeln der drehbaren Achse 57 des Sensors 56 mit der fest auf der Achsschenkelachse 9 geschraubten Mutter 58. Hierdurch wird die drehbare Achse 57 stationär zu der Achsschenkelachse 9 gehalten.

Die Kupplungsmittel umfassen hier ein scheibenförmiges Kupplungsorgan 60 mit einem zentralen Befestigungsloch 61 für die drehbare Achse 57 des Sensors 56. Das Kupplungsorgan 60 ist drehfest auf der Achse 57 festgesetzt. Weiter umfaßt das Kupplungsorgan 60 verschiedene im wesentlichen radial nach außen gerichtete Speichen 62, die zwischen ihnen jeweils ab dem Mittelteil des Kupplungsorgans 60 eine nach außen laufende Schlitzaussparung 63 bilden. Weiter umfassen die Kupplungsmittel einen exzentrisch der Achsschenkelachsenmitte 9 an dem Achsschenkel 9 angeordneten Stift 65, der in montiertem Zustand der Winkelaufnehmereinheit 18 ohne seitliches Spiel in eine der Schlitzaussparungen 63 des Kupplungsorgan 60 paßt. Der Stift 65 ist an einem klemmend auf die Mutter 58 passenden Befestigungsorgan 67 angeordnet, das hier drei federnde Klemmlaschen aufweist, die an drei flachen Schlüsselflächen der Sechskantmutter 58 anliegen.

Die Verbindung zwischen dem Gehäuse des Sensors 56 und des Achsschenkels 55 ist von einer lösbaren Kappe 69 gebildet, die über dem Ende der Achsschenkelachse 9 einen nach außen geschlossene Hohlraum 70 bildet, in dem die obenbeschriebenen Kupplungsmittel untergebracht sind. Dadurch, daß der Sensor direkt die Lage des Achsschenkels 55 zu der Achsschenkelachse 9 mißt, ist die Winkelmessung sehr genau. Weiter ist die Anordnung des Sensors 56 sehr einfach auszuführen und durch die Zusammenwirkung des Stiftes 65 mit dem Kupplungsorgan 90 unempfindlich für Ausrichtfehler gegenüber der Achsschenkelachse.

Der zweite Aspekt der vorliegenden Erfindung kann folgendermaßen beschrieben werden.

Eine Winkelaufnehmereinheit zum Detektieren des Lenkstandes eines Fahrzeugrads, welches Rad an einem Achsschenkel befestigt ist, der schwenkbar um eine stationäre Achsschenkelachse des Fahrzeugs ist, welche Winkelaufnehmereinheit einen Sensor aufweist met einem Gehäuse und einer drehbaren Sensorachse zum Verschaffen eines Signals, das repräsentativ für die Winkellage des Rades ist, dadurch gekennzeichnet, daß die drehbare Sensorachse im wesentlichen in der Verlängerung der Achsschenkelachsenmitte liegt.

Eine Winkelaufnehmereinheit nach dem vorhergehenden Absatz, bei der das Sensorgehäuse fest mit dem Achsschenkel verbunden ist, so daß die drehbare Sensorachse im wesentlichen in der Verlängerung der Achsschenkelachsenmitte liegt, und daß Kupplungsmittel zum Kuppeln der drehbaren Achse des Sensors mit der Achschenkelachse vorgesehen sind.

Eine Winkelaufnehmereinheit nach dem Anspruch des vorhergehenden Absatzes, bei der die Kupplungsmittel ein Kupplungsorgan umfassen, das an der drehbaren Achse des Sensors befestigt ist und eine oder mehrere ab der Achse nach außen laufende Schlitzaussparungen aufweist, wobei die Kupplungsmittel weiter einen exzentrisch der Achsschenkelachsenmitte an dem Achsschenkel angeordneten Stift umfassen, der in eine der Schlitzaussparungen des Kupplungsorgan paßt.

Eine Winkelaufnehmereinheit nach dem Vorhergehenden, bei der die Achsschenkelachse mit einer Mutter an ihrem Ende versehen ist, und der Stift an einem klemmend auf die Mutter passenden Befestigungsorgan angeordnet ist.

Eine Winkelaufnehmereinheit nach einem oder mehreren der vorhergehenden Absätze, bei der das Sensorgehäuse mit dem Achsschenkel über eine lösbare Kappe verbunden ist, die über dem Ende der Achsschenkelachse einen nach oben geschlossenen Hohlraum bildet, in dem die Kupplungsmittel untergebracht sind.

Eine Winkelaufnehmereinheit nach einem oder mehreren der vorhergehenden Absätze, bei der der Sensor ein Halleffektsensor ist.

Weiter bezieht sich die vorliegende Erfindung auf ein mit einer Lenkvorrichtung und/oder einer Winkelaufnehmereinheit nach der vorhergehenden Beschreibung versehenes Fahrzeug.

## Patentansprüche

1. Lenkvorrichtung für mitlenkende Hinterräder (8) eines Fahrzeugs mit lenkbaren Vorderrädern (2) und einem Verbrennungsmotor, umfassend einen auf die Hinterräder (8) angreifenden doppeltwirkenden hydraulischen Aktuator (12) mit einem Körper und einem in diesem beweglichen Kolben (20), der eine erste variable Arbeitskammer (21) und eine zweite variable Arbeitskammer (22) begrenzt, welche erste und zweite Arbeitskammern (21, 22) jeweils einen ersten und einen zweiten Anschluß (23, 24) aufweisen, einen Behälter (13) für hydraulische Flüssigkeit, und eine Pumpe (14) mit einem Sauganschluß (26) zum Ansaugen von Flüssigkeit aus dem Behälter und einen Pumpenanschluß (27) zum unter Druck Zuführen von hydraulischer Flüssigkeit zum Aktuator (12), wobei weiter ein steuerbares erstes Wegeventil (30; 50) mit drei Stellungen vorgesehen ist, welches erstes Wegeventil (30; 50) in seiner ersten gesteuerten Stellung den Pumpenanschluß (27) der Pumpe (14) mit dem ersten Anschluß (23) und den zweiten Anschluß (24) mit dem Behälter (13) verbindet und in seiner zweiten gesteuerten Stellung den Pumpenanschluß (27) mit dem zweiten Anschluß (24) und den ersten Anschluß (23) mit dem Behälter (13) verbindet,
**dadurch gekennzeichnet, daß**
- die Pumpe dazu ausgelegt ist, antriebsmäßig mit dem Verbrennungsmotor des Fahrzeugs verbunden zu sein, in solcher Weise, daß die Pumpe gleichzeitig mit dem Verbrennungsmotor in Betrieb ist,
und daß das erste Ventil (30; 50) in solcher Weise ausgeführt ist, daß das erste Ventil (30; 50) in seiner dritten Stellung den ersten und den zweiten Anschluß (23, 24) des Aktuators (12) miteinander und mit dem Behälter (13) verbindet und den ersten und zweiten Anschluß (23, 24) von dem Pumpenanschluß der Pumpe abschließt,
- ein zweites Ventil (40; 60) vorgesehen ist, welches zweite Ventil an einer Seite an die Leitung zwischen dem Pumpenanschluß (27) und dem ersten Ventil (30; 50) und an der anderen Seite an den Behälter anschließt, wobei das zweite Ventil (40; 60) ein von einem Steuersignal steuerbares Druckregelventil ist.

2. Lenkvorrichtung nach Anspruch 1, bei der die Lenkvorrichtung dazu ausgelegt ist, während einer Lenkbewegung des Aktuators einen im wesentlichen ständigen hydraulischen Volumenstrom bei dem von dem ersten Ventil mit dem Pumpenanschluß verbundenen Anschluß des Aktuators aufrechtzuerhalten.

3. Lenkvorrichtung nach Anspruch 1 oder 2, bei der das erste Ventil (30; 50) eine Drosselung in der Verbindung zwischen dem ersten und dem zweiten Anschluß (23, 24) des Aktuators (12) bildet.

4. Lenkvorrichtung nach einem oder mehreren der Ansprüche 1 - 3, bei der das erste Ventil ein Proportionalventil (30) ist, zum Regeln der dem Aktuator (12) über das erste Ventil zugeführten hydraulischen Flüssigkeit.

5. Lenkvorrichtung nach Anspruch 4, bei der das zweite Ventil (40) ein Druckausgleichventil mit einem Steuerdruckanschluß (41) ist, der über ein Wechselventil (43) mit dem ersten und dem zweiten Anschluß (23, 24) des Aktuators (12) in Verbindung steht.

6. Lenkvorrichtung nach einem oder mehreren der Ansprüche 1 - 3, bei der das erste Ventil ein Dreistellungen-Wegesteuerventil (50) ist, und bei der das zweite Ventil (60) ein Zweistellungen-proportionalventil ist, das zwischen dem Pumpenanschluß (27) und dem ersten Ventil (50) angeordnet ist und in seiner ersten Stellung den Pumpenanschluß (27) mit dem Behälter (13) verbindet und in seiner zweiten Stellung geschlossen ist.

7. Lenkvorrichtung nach einem oder mehreren der vorhergehenden Ansprüche, bei der weiter ein elektronischer Regler vorgesehen ist, der in solcher Weise ausgeführt ist, daß sowohl beim Geradeausfahren mit dem Fahrzeug, als auch beim Auftreten irgendwelcher Störung in der Lenkvorrichtung, sich das Dreistellungen-wegeventil in seiner dritten Stellung befindet, und das zweite Ventil den Pumpenanschluß der Pumpe mit dem Behälter verbindet.

8. Lenkvorrichtung nach einem oder mehreren der vorhergehenden Ansprüche, bei der die mitlenkenden Räder mit der gemeinsamen Mittellinie fluchten und jeweils schwenkbar um eine zugehörige Achsschenkelachse sind und dabei untereinander durch eine Spurstange verbunden sind.
